# FASCICULE DE BREVET EUROPEEN

(11) **EP 4 461 619 B1**
(45) Date de publication et mention de la délivrance du brevet: **10.12.2025**
(21) Numéro de dépôt: 24170315.6
(22) Date de dépôt: 15.04.2024
(51) Int. Cl.: B62B 3/10, F17C 13/08

(54) **CHARIOT HOSPITALIER DE TRANSPORT DE BOUTEILLE DE GAZ À SANGLES DE FIXATION SEMI-RIGIDES**
KRANKENHAUSWAGEN ZUM TRANSPORT VON GASFLASCHEN MIT HALBSTARREN BEFESTIGUNGSGURTEN
HOSPITAL TROLLEY FOR TRANSPORTING A GAS CYLINDER WITH SEMI-RIGID FIXING STRAPS

(30) Priorité: 12.05.2023 FR 2304751
(43) Date de publication de la demande: 13.11.2024
(73) Titulaire: INOSYSTEMS, 92160 Antony (FR)
(72) Inventeur: MARCHAL, Frederic, 92160 Antony (FR); TIRILLY, Nicolas, 92160 Antony (FR); SCHMITT, Mary, 92160 Antony (FR); BLANDIN, Yann, 92160 Antony (FR)
(74) Mandataire: Air Liquide

(56) Documents cités:
- EP-A1- 4 159 585
- US-A1- 2005 023 781
- US-B1- 6 168 130

## Description

L'invention concerne un chariot mobile hospitalier permettant le transport simultané d'une ou plusieurs bouteille(s) de gaz sous pression et d'un appareil de fourniture de gaz, notamment de NO médical, afin de pouvoir fournir le gaz à un patient en ayant besoin, en particulier en milieu hospitalier, notamment dans les unités de soins intensifs. Le chariot selon l'invention comprend des sangles de fixation améliorées facilitant la fixation du ou des bouteille(s) de gaz sous pression au chariot afin d'éviter qu'elles ne puissent basculer et chuter sur le sol.

Le monoxyde d'azote ou NO est un médicament gazeux utilisé pour traiter différentes conditions médicales chez un patient, comme l'Hypertension Artérielle Pulmonaire du Nouveau-né ou PPHN (pour *Persistent Pulmonary Hypertension of the Newborn),* le Syndrome de Détresse Respiratoire Aigüe ou SDRA observé principalement chez l'adulte ou encore les hypertensions pulmonaires ou HP en chirurgie cardiaque, comme enseigné notamment par EP-A-560928, EP-A-1516639 ou US-A-10,201,564.

Usuellement, le NO gazeux est conditionné en bouteille de gaz sous pression, sous forme diluée dans de l'azote (N₂), c'est-à-dire sous forme de mélanges NO/N₂. Classiquement, la concentration volumique en NO dans un mélange NO/N₂ conditionné en bouteille de gaz sous pression est comprise entre 100 et 10 000 ppmv, en général entre 200 et 1000 ppmv, par exemple de 800 ppmv. (i.e. ppmv = ppm en volume).

Afin de l'administrer à un patient, le NO gazeux, i.e le mélange gazeux NO/N₂, provenant d'une ou plusieurs bouteilles de gaz est fourni à un appareil de délivrance de NO qui est lui-même raccordé à la branche inspiratoire d'un circuit patient connecté fluidiquement, d'une part, à un ventilateur mécanique fournissant de l'air ou un mélange N₂/O₂ et, d'autre part, à une interface respiratoire (e.g. sonde d'intubation, masque respiratoire...) délivrant le mélange gazeux final contenant le NO à la posologie désirée, lequel a été obtenu par mélange du flux de NO avec le flux d'air ou de mélange N₂/O₂, comme décrit par US-A-5,558,083.

En milieu hospitalier, le déplacement ou transport des bouteilles de gaz, des matériels ou des appareils médicaux se fait classiquement au moyen d'un chariot de transport. Des exemples de différents chariots hospitaliers sont données par EP2574361, EP1977712, EP3854368, EP3854660, US2009/0302178, FR2926728 et FR2910362.

On connaît aussi US2016/0310693 qui enseigne un chariot mobile comprenant une embase montée sur roulettes et équipée d'emplacements de stockage pour loger des bouteilles de gaz, notamment de NO. Les bouteilles de gaz sont maintenues par des sangles de fixation. En effet, il est usuel de sécuriser les bouteilles, en les fixant solidement à la structure-support du chariot pour éviter leurs chutes éventuelles.

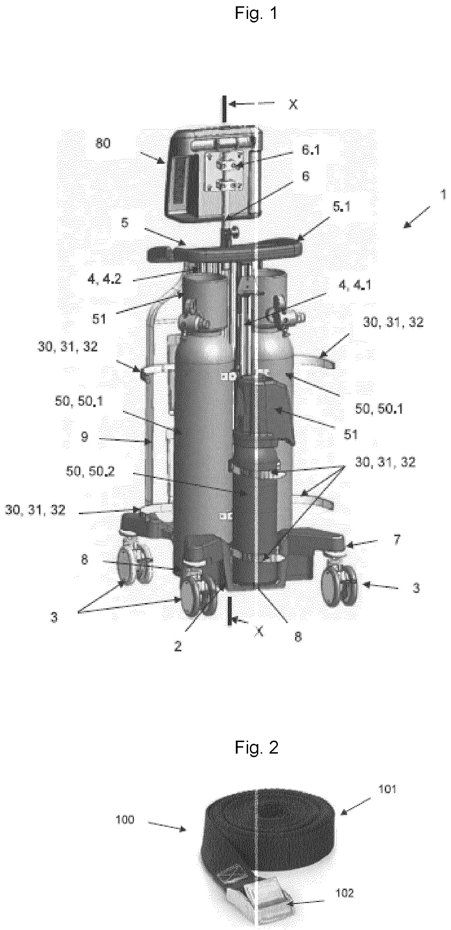

Pour ce faire, on utilise couramment des sangles en tissu souple qui sont équipées de boucles de fermeture, comme illustré en Fig. 2. Or, en pratique, ce type de sangles souples posent plusieurs problèmes, en particulier elles sont difficiles à mettre en place, en particulier elles ont tendances à aller se coincer derrière les bouteilles de gaz, et engendrent dès lors une perte de temps lors de leur mise en place par le personnel soignant, et par ailleurs sont difficiles à nettoyer et à désinfecter.

On connait par ailleurs EP4159585 qui décrit un chariot mobile hospitalier servant au transport de plusieurs bouteilles de gaz, lesquelles sont retenues par des sangles de fixation. Toutefois, les sangles proposées ne sont pas idéales car leurs mécanismes d'attache, qui sont analogues de ceux équipant les sangles en tissu souple, ne permettent pas d'assurer un serrage efficace des sangles autour des bouteilles, ce qui peut conduire à un basculement suivi d'une chute accidentelle d'une de ces bouteilles, donc présente un risque pour le personnel soignant.

Autrement dit, le problème est de proposer un chariot médical mobile amélioré, notamment en termes de sécurité, permettant de résoudre tout ou partie des problèmes susmentionnés.

Selon l'invention, il est proposé un chariot mobile, i.e. une unité de transport de bouteilles de gaz et éventuellement d'autres matériels ou appareils qui est conçue pour rouler sur le sol lors de ses déplacements, comprenant :
- une embase configurée pour loger, i.e. recevoir, au moins une bouteille de gaz,
- plusieurs roulettes pour déplacer le chariot sur le sol,
- une structure-support se projetant vers le haut depuis l'embase, et
- au moins un dispositif de fixation (i.e. un dispositif d'attache) agencé sur la structure-support pour fixer (i.e. attacher) ladite au moins une bouteille de gaz à ladite structure-support,
dans lequel ledit au moins un dispositif de fixation comprend un premier élément de sangle comprenant une première extrémité libre, et un second élément de sangle comprenant un dispositif de connexion, ledit premier élément de sangle venant coopérer avec le second élément de sangle pour permettre leur solidarisation l'un à l'autre, lorsque la première extrémité libre du premier élément de sangle coopère avec le dispositif de connexion du second élément de sangle.

De plus, selon l'invention, le premier élément de sangle et le second élément de sangle sont en (un des) matériau polymère semi-rigide. Utiliser des éléments de sangle en matériau polymère semi-rigide est avantageux et répond au problème susmentionné. En effet, les manipulations des sangles par l'utilisateur sont plus aisées car les sangles restent en position contrairement à des sangles en tissus qui tombent par gravité. De plus, le nettoyage des sangles est simplifié car les sangles en polymères ne comportent pas de porosités que des sangles souples en tissu, donc se salissent moins vite et/ou se nettoient plus aisément.

Par ailleurs, le dispositif de connexion du second élément de sangle comprend :
- un corps principal traversé par un passage interne s'étendant entre une entrée et une sortie, et configuré pour loger au moins une partie du premier élément de sangle,
- des moyens de blocage mobiles entre au moins deux positions comprenant :
   ▪ une position de blocage dans laquelle les moyens de blocage coopèrent avec une région texturée en relief du premier élément de sangle inséré dans le passage interne, pour empêcher ou s'opposer à, c'est-à-dire interdire, (au moins) tout mouvement de retrait (i.e. partiel ou total) dudit premier élément de sangle du passage interne,
   ▪ et une position de libération dans laquelle les moyens de blocage permettent (i.e. autorisent ou ne s'opposent plus) un mouvement de retrait (i.e. partiel ou total) du premier élément de sangle dans ledit passage interne, et
- des moyens de libération, actionnables par l'utilisateur, coopérant avec les moyens de blocage pour les faire passer de la position de blocage à la position de libération, lorsqu'ils sont actionnés par l'utilisateur.

De plus, le dispositif de connexion du second élément de sangle comprend en outre des moyens de serrage, actionnables par l'utilisateur, configurés pour coopérer avec la région texturée en relief du premier élément de sangle, lorsque le premier élément de sangle est inséré dans le passage interne du dispositif de connexion du second élément de sangle et que les moyens de blocage sont en position de blocage, de manière à faire progresser en translation, lorsqu'ils sont actionnés par l'utilisateur, le premier élément de sangle au sein du passage interne du dispositif de connexion, dans le sens de l'insertion, et ce, pour accroitre ou améliorer l'efficacité de serrage.

Selon le mode de réalisation considéré, le chariot de l'invention peut comprendre l'une ou plusieurs des caractéristiques suivantes :
- les premier élément de sangle et second élément de sangle sont en matériau polymère choisi parmi le polyuréthane ou polyamide, tel le Nylon^{®}.
- le premier élément de sangle et le second élément de sangle sont configurés pour se solidariser l'un à l'autre, c'est-à-dire être attachés ou raccordés l'un à l'autre.
- les moyens de blocage sont mobiles entre au moins deux positions, comprenant la position de blocage ou de verrouillage, et la position de libération ou de déverrouillage, et éventuellement une ou des positions intermédiaires.
- le premier élément de sangle est configuré pour être inséré (i.e. introduit), via sa première extrémité libre, au sein (i.e. dans le) du passage interne du dispositif de connexion du second élément de sangle, via l'entrée dudit passage interne du dispositif de connexion, afin de permettre de bloquer (i.e. solidariser) le premier élément de sangle au sein dudit passage interne du dispositif de connexion du second élément de sangle.
- le premier élément de sangle peut être (au moins en partie) inséré par l'utilisateur au sein du passage interne du dispositif de connexion du second élément de sangle via un mouvement de translation, c'est-à-dire un mouvement d'insertion en translation, afin d'assurer une fixation des premier et second éléments de sangle l'un à l'autre, et assurer ainsi une fixation (i.e. une attache) de la bouteille de gaz au chariot.
- à l'inverse, le premier élément de sangle peut être (au moins en partie) retiré, i.e. extrait, par l'utilisateur du passage interne du dispositif de connexion du second élément de sangle via un mouvement de retrait ou rétraction, également en translation, lequel est opposé au mouvement d'insertion, c'est-à-dire un mouvement de retrait en translation.
- le mouvement de retrait du premier élément de sangle du passage interne ou d'insertion du premier élément de sangle dans le passage interne est un mouvement translatif.
- en position de blocage, les moyens de blocage viennent appuyer sur la région texturée en relief.
- la région texturée en relief comprend une succession de cannelures juxtaposées, en particulier agencées en parallèles les unes des autres.
- selon un mode de réalisation, les cannelures sont rectilignes (i.e. linéaires).
- la région texturée en relief est portée sur une face externe du premier élément de sangle.
- la région texturée en relief s'étend sur la face externe depuis la première extrémité libre, c'est-à-dire le côté ou la surface face du premier élément de sangle qui n'est pas en contact avec le corps d'une bouteille de gaz.
- la région texturée en relief comprend une succession de cannelures formant des stries en relief ou analogue.
- les cannelures sont juxtaposées les unes aux autres.
- les cannelures sont conformées pour permettre une insertion (en translation) du premier élément de sangle dans le passage interne du corps du dispositif de connexion mais empêcher son retrait dudit passage interne, lorsque les moyens de blocage sont en position de blocage et viennent coopérer avec les cannelures.
- les cannelures forment un relief en 'pics' et en 'vallées'.
- les cannelures ont des sections triangulaires ou analogues.
- les cannelures présentent chacune un côté avant formant une rampe et un côté arrière (sensiblement) vertical, séparés par un sommet.
- le côté avant formant une rampe forme avec le côté arrière (sensiblement) vertical un angle compris entre 30 et 60°, de préférence de l'ordre de 40 à 50°.
- deux cannelures successives sont séparées par une vallée.
- le premier élément de sangle comprend en outre une face interne opposée à la face externe.
- la face interne du premier élément de sangle vient appuyer sur la bouteille maintenue par ledit premier élément de sangle, c'est-à-dire que la face interne du premier élément de sangle est en contact avec le corps de la bouteille de gaz à maintenir.
- la face interne du premier élément de sangle est lisse, c'est-à-dire non texturée.
- la région texturée en relief s'étend sur au moins 30%, de préférence au moins 40%, de préférence au moins 50%, de préférence au moins 75%, voire au moins 80%, de la superficie ou surface de la face externe du premier élément de sangle.
- le premier élément de sangle et le second élément de sangle ont chacun une forme allongée, de préférence une forme de bande, de ruban ou analogue.
- le premier élément de sangle comprend une seconde extrémité solidaire de la structure-support, typiquement fixée à la colonne avant ou à la colonne arrière, par exemple par vissage.
- le second élément de sangle comprend une extrémité amont solidaire de la structure-support, typiquement fixée à la colonne avant ou à la colonne arrière, par exemple par vissage.
- selon un autre mode de réalisation, le premier élément de sangle et le second élément de sangle sont solidarisés l'un à l'autre via la seconde extrémité du premier élément de sangle et l'extrémité amont du second élément de sangle qui viennent se raccorder l'une à l'autre.
- selon encore un autre mode de réalisation, le premier élément de sangle et le second élément de sangle sont formés d'une bande polymère unique.
- il comprend plusieurs dispositifs de fixation, de préférence des paires de dispositifs de fixation.
- les paires de dispositifs de fixation sont fixées à la structure-support, typiquement fixée à la colonne avant et/ou à la colonne arrière, par exemple par vissage.
- chaque bouteille de gaz est fixée par une paire de dispositifs de fixation.
- il comprend au moins une bouteille de gaz contenant un mélange NO/N₂ et/ou une bouteille d'oxygène agencée(s) sur l'embase.
- selon un mode de réalisation, il comprend deux bouteilles de gaz contenant un mélange gazeux NO/N₂ et une bouteille d'oxygène agencées sur l'embase.
- en position de blocage, les moyen de blocage empêchent tout mouvement de retrait du premier élément de sangle dudit passage interne.
- en position de libération, les moyen de blocage ne coopèrent pas ou plus avec le premier élément de sangle de manière à permettre le retrait du premier élément de sangle.
- le passage interne du corps du dispositif de connexion est configuré et dimensionné pour loger (i.e. recevoir) au moins une partie du premier élément de sangle lorsque ledit premier élément de sangle y est inséré par l'utilisateur, via l'entrée et en direction de la sortie dudit passage interne.
- les moyens de libération, actionnables par l'utilisateur, coopèrent avec les moyens de blocage pour les faire passer de la position de libération à la position de blocage, lorsqu'ils ne sont pas actionnés par l'utilisateur, c'est-à-dire relâchés.
- la position de blocage correspond à une position « par défaut » ou « de repos ».
- les moyens de libération et les moyens de blocage sont mobiles l'un par rapport à l'autre, par exemple pivotants l'un par rapport à l'autre.
- les moyens de libération sont actionnables par pression digitale de l'utilisateur, par exemple par appui avec son index.
- les moyens de libération comprennent un bouton-poussoir ou analogue, typiquement un bouton-poussoir sur lequel l'utilisateur vient appuyer pour l'actionner.
- lorsqu'ils sont actionnés par l'utilisateur, les moyens de libération viennent agir mécaniquement, directement ou indirectement, sur les moyens de blocage pour les faire passer de la position de blocage à la position de libération.
- les moyens de blocage sont normalement rappelés en position de blocage en l'absence de tout actionnement par l'utilisateur des moyens de libération.
- les moyens de blocage sont normalement rappelés en position de blocage par un moyen ou dispositif de rappel, de préférence un moyen de rappel élastique, par exemple par un dispositif ou moyen à ressort ou analogue.
- en position de libération, les moyens de blocage n'interagissent plus avec le premier élément de sangle, en particulier avec ladite région texturée en relief, en particulier pour permettre le retrait du premier élément de sangle du passage interne du corps du dispositif de connexion.
- les moyens de blocage comprennent une partie en saillie, telle une came ou analogue, venant coopérer avec la région texturée en relief, typiquement avec les cannelures rectilignes, afin de s'opposer au retrait, i.e. bloquer ou empêcher, du premier élément de sangle du passage interne du corps du dispositif de connexion, lorsque lesdits moyens de blocage, typiquement ladite partie en saillie, viennent coopérer avec la région texturée en relief, en position de blocage.
- les moyens de serrage comprennent un élément de levier actionnable par l'utilisateur.
- l'élément de levier est pivotant, i.e. basculant, de préférence selon un axe YY.
- l'élément de levier comprend une portion distale venant coopérer avec la région texturée du premier élément de sangle, lorsque le premier élément de sangle est logé dans le passage interne du dispositif de connexion du second élément de sangle.
- la portion distale de l'élément de levier vient appuyer (e.g. en butée) sur la région texturée du premier élément de sangle, en particulier sur l'une des faces d'une cannelure, typiquement sa face arrière verticale.
- la portion proximale de l'élément de levier est actionnable par l'utilisateur, en particulier il peut l'actionner et/ou la saisir pour faire pivoter ou basculer l'élément de levier.
- la portion proximale et la portion distale de l'élément de levier sont reliées par une portion de jonction.
- la portion proximale à une forme de boucle.
- les moyens de serrage sont mobiles au moins entre une position de repos dans laquelle ils n'interagissent pas avec la région texturée du premier élément de sangle et une position d'actionnement dans laquelle ils interagissent, i.e. coopèrent, avec la région texturée du premier élément de sangle.
- les moyens de serrage sont normalement rappelés en position de repos en l'absence de tout actionnement par l'utilisateur.
- les moyens de serrage sont normalement rappelés en position de repos par un moyen de rappel additionnel, tel un moyen de rappel élastique additionnel, en particulier par un dispositif ou moyen à ressort ou analogue.
- le passage interne du corps du dispositif de connexion a une première section rectangulaire, de préférence il forme une fente.
- le premier élément de sangle et le second élément de sangle ont une section rectangulaire (i.e. une forme).
- le premier élément de sangle est dimensionné de manière à pouvoir être inséré en translation au sein du passage interne du corps du dispositif de connexion.
- le premier élément de sangle a une seconde section (i.e. une forme) rectangulaire complémentaire de la première section rectangulaire du passage interne du corps du dispositif de connexion de manière à pouvoir être inséré en translation au sein dudit passage interne du corps du dispositif de connexion, c'est-à-dire que la seconde section est inférieure à la première section.
- les éléments de sangle comprennent ou sont des tronçons de sangle.
- l'embase, i.e. un châssis ou analogue, comprend au moins un emplacement de stockage de bouteille de gaz pour y loger une bouteille de gaz, de préférence plusieurs emplacement de stockage de bouteille de gaz.
- selon un mode de réalisation, l'embase comprend trois emplacements conformés pour recevoir deux bouteilles de mélange gazeux NO/N₂ et une bouteille d'oxygène.
- il comprend au moins 3 ou 4 roulettes servant à déplacer le chariot sur le sol, typiquement 4 roulettes, de préférence orientables et/ou munies d'un frein.
- il comprend au moins au moins une poignée de préhension manuelle permettant à un utilisateur de manipuler le chariot, en particulier de le diriger, de le tirer ou le pousser, lors de déplacements sur le sol.
- la poignée de préhension manuelle est fixée, directement ou indirectement, à la structure-support. Elle est dimensionnée pour être saisie manuellement par un utilisateur pour manœuvrer le chariot.
- la structure-support comprend au moins une colonne arrière, aussi appelée colonne principale.
- la structure-support comprend (au moins) une colonne arrière et une colonne avant, aussi appelée colonnes principale et secondaire, de préférence les colonnes sont agencées en parallèle l'une de l'autre.
- les colonnes avant et arrière se projettent vers le haut depuis l'embase.
- les colonnes avant et arrière sont agencées espacées l'une à l'autre, de préférence espacées de plusieurs centimètres à plusieurs dizaines de centimètres.
- les colonnes avant et arrière sont par exemple des profilés de section circulaire, rectangulaire ou carrée, ou autre.
- la colonne avant a une section de l'ordre de 3 à 8 cm, typiquement de 3 à 6 cm, par exemple une section carrée de 4 x 4 cm.
- la colonne arrière a une section de l'ordre de 3 à 25 cm, par exemple une section rectangulaire de 4 x 16 cm.
- les colonnes avant et arrière sont des profilés longilignes, de préférence des profilés en alliage d'aluminium. Toutefois, un autre matériau pourrait éventuellement convenir.
- la structure-support est surmontée d'une structure-plateau, de préférence comprenant un plateau pour recevoir des instruments, matériels médicaux ou autres.
- les colonnes avant et arrière sont solidarisées l'une à l'autre, de préférence à leurs extrémités supérieures, notamment via une structure d'ancrage.
- la structure d'ancrage porte ou comprend le plateau, par exemple une plaque ou analogue formant plateau.
- il comprend un caisson de rangement fixé, directement ou indirectement, à la structure-support, en particulier à la colonne principale.
- le caisson est plat et/ou en polymère.
- le caisson a une forme générale parallélépipédique (approximativement) rectangle.
- le caisson comprend un ou plusieurs compartiments de rangement internes, avec ou sans portes d'accès ou analogues.
- le caisson a une hauteur (H) comprise environ entre 60 et 110 cm, une largeur (L) comprise entre 15 et 60 cm, et une épaisseur (E) comprise entre 5 et 18 cm.
- au moins une bouteille de gaz est logée dans au moins un emplacement de l'embase, de préférence une bouteille de gaz contenant un mélange NO/N₂.
- il comprend deux bouteilles de mélange NO/N₂ logées dans deux emplacements de l'embase.
- la colonne secondaire est agencée, i.e. située, entre les deux bouteilles de mélange NO/N₂.
- la (ou les) bouteille de gaz contient un mélange gazeux NO/N₂ contenant de 100 à 10 000 ppmv de NO et de l'azote pour le reste, de préférence de 100 à 2000 ppmv de NO.
- la (ou les) bouteille de gaz, i.e. chaque bouteille de mélange NO/N₂, contient un mélange gazeux NO/N₂ contenant de 100 à 1000 ppmv de NO et de l'azote pour le reste, de préférence de 200 à 1000 ppmv de NO.
- la (ou les) bouteille de gaz contient du gaz à une pression comprise entre 5 bar et au moins 200 bar abs.
- chaque bouteille de mélange NO/N₂ est fixée, directement ou indirectement, à l'une des colonnes avant ou arrière.
- il comprend en outre une bouteille d'oxygène (O₂) dans un emplacement additionnel de l'embase.
- la bouteille d'oxygène (O₂) est fixée, directement ou indirectement, à la colonne avant.
- la structure-support est surmontée d'un mât destiné à porter un appareil de délivrance de gaz.
- le mât est solidaire de la structure-support, en particulier de la structure d'ancrage solidarisant la colonne principale à la colonne secondaire.
- un appareil de délivrance de gaz est fixé au mât, de préférence via une platine de fixation de type VESA ou analogue, en particulier un appareil de fourniture de mélange NO/N₂.
- la (ou les) bouteille de gaz est équipée d'un robinet de distribution de gaz, en particulier un robinet à détendeur intégré (RDI).
- la (ou les) bouteille de gaz est équipée d'un capotage de protection protégeant le robinet de distribution de gaz.
- la (ou les) bouteille de gaz ont une forme d'ogive, i.e. un corps cylindrique surmonté d'une portion resserrée formant goulot avec orifice d'entrée/sortie de gaz communiquant avec le volume de stockage interne de la bouteille de gaz.
- le chariot mobile est conçu pour être roulé sur le sol lorsqu'il est manipulé et déplacé, typiquement poussé ou tiré, par un utilisateur, en particulier un personnel soignant, par exemple un médecin, une infirmière ou analogue, au sein d'un bâtiment hospitalier ou analogue.
- l'embase du chariot est située en partie basse du chariot, c'est-à-dire à sa base qui est située à proximité immédiate du sol.
- l'embase du chariot comprend une plateforme où sont aménagés les emplacements de stockage qui sont dimensionnés pour recevoir chacun une bouteille de gaz en position debout.
- le chariot comprend trois emplacements de stockage agencés en triangle.
- les robinets de distribution de gaz des bouteilles de gaz sont reliés fluidiquement à l'appareil de fourniture de mélange NO/N₂ par des tuyaux flexibles de manière à alimenter l'appareil en mélange NO/N₂ et préférentiellement en oxygène.

L'invention concerne aussi l'utilisation d'un chariot mobile selon l'invention pour transporter une ou plusieurs bouteille(s) de gaz sous pression, tel un mélange NO/N₂ et/ou de l'oxygène, et préférentiellement un appareil de fourniture de gaz, typiquement un appareil de fourniture de NO (i.e. mélange NO/N₂ ) destiné à être administré à un patient adulte, un enfant ou un nouveau-né souffrant de PPHN, SDRA, HP ou d'une autre pathologie pulmonaire, via un circuit respiratoire alimenté en un gaz respiratoire contenant au moins 20% vol, d'oxygène, tel de l'air ou un mélange N₂/O₂, provenant d'un ventilateur médical.

Dans le cadre de l'invention, le terme « moyen » peut être remplacé par les termes « dispositif », « mécanisme » ou « système », ou tout terme analogue. Par exemple, les termes « moyens de blocage » peuvent être substitués par « dispositif de blocage », « mécanisme de blocage » ou « système de blocage » ; de même, les termes « moyens de libération » par « dispositif de libération », « mécanisme de libération » ou « système de libération » ; et les termes « moyens de serrage » par « dispositif de serrage », « mécanisme de serrage » ou « système de serrage ».

L'invention va maintenant être mieux comprise grâce à la description détaillée suivante, faite à titre illustratif mais non limitatif, en référence aux figures annexées parmi lesquelles :
Fig. 1 schématise un mode de réalisation d'un chariot mobile selon l'invention selon une vue de ¾ arrière.
Fig. 2 représente une sangle en tissu souple selon l'art antérieur.
Fig. 3 à Fig. 10 représentent un mode de réalisation d'un dispositif de connexion à éléments de sangle rigides selon l'invention, servant à la solidarisation des bouteilles de gaz au chariot de Fig. 1.

Fig. 1 schématise un mode de réalisation d'un chariot mobile 1 selon l'invention, destiné au milieu hospitalier ou analogue, lequel est conçu pour être déplacé facilement sur le sol, i.e. roulé, lorsqu'il est manœuvré, typiquement poussé ou tiré, par un personnel soignant, par exemple un médecin, une infirmière ou analogue, au sein d'un bâtiment hospitalier ou analogue.

Sur Fig. 1, le chariot 1 est équipé de ses équipements, en particulier 3 bouteilles de gaz 50, 50.1, 50.2 et un appareil de fourniture de gaz 80, ici de fourniture de NO. Le chariot 1 comprend un côté avant et un côté arrière. Le côté arrière est celui situé face à l'utilisateur, lorsque ce dernier pousse le chariot 1 pour le déplacer par roulage sur le sol, c'est-à-dire le côté où se trouve le caisson 9, alors que le côté avant du chariot 1 est celui situé où sont les bouteilles de gaz 50.

Le chariot mobile 1 de l'invention comprend, en partie inférieure, une embase 2 ou châssis comprenant plusieurs roulettes 3, à savoir ici deux paires de roulettes, servant à déplacer par roulage du chariot 1 sur le sol. Les roulettes 3 sont des petites roues qui sont agencées, de manière pivotante, sur des expansions 7 de l'embase 2 formant des jambes ou analogues. Les expansions 7 sont formées d'une seule pièce avec le reste de l'embase 2, par exemple par moulage injection ou autre, par exemple formées de polymère.

De préférence, les roulettes 3 comprennent un dispositif de blocage, tel un frein ou analogue, permettant de les bloquer afin d'empêcher leur rotation, ce qui permet d'immobiliser le chariot 1 sur le sol et donc d'éviter tout déplacement involontaire ou intempestif de celui-ci. L'activation ou, à l'inverse, la désactivation du dispositif de blocage des roulettes se fait au moyen d'une pédale de commande (non visible car du côté arrière) actionnable ou analogue par l'utilisateur, notamment lorsqu'il appuie dessus avec son pied.

Plus précisément, l'embase 2 comprend plusieurs emplacements de stockage 8, du côté avant du chariot 1, servant à loger les bouteilles de gaz 50, à savoir ici deux bouteilles 50.1 contenant un mélange NO/N₂, par exemple un mélange NO/N₂ contenant de 100 à 1000 ppm de NO et de l'azote pour le reste, et une bouteille 50.2 contenant de l'oxygène gazeux.

Les bouteilles de gaz 50 ont un corps cylindrique et généralement une forme d'ogive. Elles sont par exemple en alliage d'aluminium, en matériaux composite ou en acier. Chaque bouteille 50 est équipée d'un robinet de distribution de gaz (non visible), par exemple un robinet à détendeur intégré ou RDI ou un robinet classique, agencé au niveau de son col comprenant l'orifice communiquant fluidiquement avec le volume interne de la bouteille, et préférentiellement d'un capotage de protection 51 servant à protéger le robinet de distribution de gaz contre les chocs notamment. Les robinets de distribution de gaz des bouteilles de gaz sont habituellement reliés fluidiquement à l'appareil de fourniture de gaz 80 par des tuyaux flexibles pour l'alimenter en mélange NO/N₂ et en oxygène.

Les emplacements de stockage 8 de l'embase 2 comprennent chacun une petite plateforme, par exemple en forme de disque, sur laquelle repose chaque bouteille de gaz 50, en position debout.

Le chariot 1 comprend en outre une structure-support 4 se projetant vers le haut depuis l'embase 2, c'est-à-dire (approximativement) verticalement selon l'axe vertical (AA) du chariot 1. Ici, la structure-support 4 comprend une colonne arrière 4.2 et une colonne avant 4.1, agencées en parallèle l'une de l'autre, et décalées l'une à l'autre, i.e. légèrement espacées, par exemple de quelques centimètres à quelques dizaines de centimètres selon la taille du chariot 1. Utiliser deux colonnes 4.1, 4.2 parallèles permet d'augmenter la solidité et robustesse de l'ensemble.

Un caisson de rangement 9 est agencé le long de la structure-support 4, en particulier le long de la colonne arrière 4.2. Le caisson de rangement 9 s'étend sensiblement entre l'embase 2 et la structure-plateau 5, c'est-à-dire qu'il se projette vers le haut depuis l'embase 2 selon l'axe vertical (AA) du chariot 1. Le caisson 9 a avantageusement une forme aplatie pour limiter l'encombrement de l'ensemble et peut être fait de polymère ou de composite. Il comprend un ou des compartiments internes servant au rangement de matériel médical, tels des accessoires servant aux soins, des ustensiles divers, tels des kits d'administration de gaz, des masques respiratoires ou des sondes trachéales, des tuyaux, des connecteurs ..., des documents, telle une notice d'utilisation de l'appareil 80, ou autres. La façade avant (non visible) du caisson 9 peut comprendre une ou des portes, par exemple pivotantes ou basculantes, donnant accès aux compartiments de rangement internes.

Une structure-plateau 5 est agencée au niveau de l'extrémité supérieure de la structure-support 4, laquelle porte une poignée 5.1 de préhension manuelle destinée à être saisie manuellement par un utilisateur pour manœuvrer et guider le chariot 1 lors de ses déplacements sur le sol. La structure-plateau 5 peut former un plateau, bac ou analogue servant à recevoir des petits matériels, ustensiles, documents ou autres, pouvant être utilisés durant le traitement du patient.

Par ailleurs, un mât 6 porté par la structure-plateau 5 ou par la structure-support 4, se projette vers le haut, c'est-à-dire selon l'axe vertical (AA), et porte l'appareil de fourniture de gaz 80, en particulier ici un appareil de fourniture de mélange NO/N₂. L'appareil peut y être fixé via une platine-support 6.1, par exemple de type VESA *(Video Standards Electronics Association* ou association des normes électroniques vidéo).

Afin d'accroitre la solidité du chariot 1, la colonne principale ou colonne arrière 4.2 et la colonne secondaire ou colonne avant 4.1 peuvent être solidarisées l'une à l'autre, typiquement à leurs extrémités supérieures, au moyen d'une structure d'ancrage (non visible), par exemple une plaque ou analogue. La structure d'ancrage peut porter, comprendre ou constituer la structure-plateau 5.

De façon classique, l'appareil de fourniture de gaz 80 est destiné à être raccordé fluidiquement, pendant le traitement d'un patient, au circuit patient reliant fluidiquement un ventilateur médical à une interface respiratoire, tel un masque ou une sonde trachéale, délivrant le gaz, par exemple un mélange gazeux à base de NO, d'oxygène et d'azote, aux voies aériennes du patient à traiter. L'appareil de fourniture de gaz 80 est alimenté en gaz, en particulier en NO/N₂, par la ou les bouteilles 50, 50.1, 50.2, et en O₂ par la bouteille d'O₂ 50.2, via des tuyaux flexibles d'acheminement de gaz venant se raccorder aux raccords de sortie des robinets de distribution de gaz équipant ces bouteilles 50, 50.1, 50.2.

Comme visible sur Fig. 1, les bouteilles de gaz 50 doivent être maintenues en place sur le chariot 1 au moyen de dispositifs d'attache ou de fixation 30 fixés à la structure-support 4, en particulier aux colonnes 4.1, 4.2. En général, on prévoit plusieurs dispositifs de fixation 30 par bouteille 50, typiquement 2 dispositifs de fixation 30, venant maintenir des zones ou régions haute et basse du corps de chaque bouteille 50. Leur positionnement vertical sur les colonnes 4.1, 4.2 peut être fixe ou alors ajustable axialement (XX) afin de pouvoir fixer fermement et efficacement des bouteilles 50 de tailles différentes.

Attacher ou fixer les bouteilles de gaz 50 permet d'éviter leur chute, notamment pendant les déplacements du chariot 1, donc améliore la sécurité d'utilisation du chariot 1.

Classiquement, en tant que de dispositifs de fixation 30, on utilise des sangles 100 souple, c'est-à-dire non rigides, formée d'une bande 101 de tissu souple équipée d'un connecteur 102, comme illustré en Fig. 2. Or, utiliser de telles sangles 100 n'est pas pratique, notamment du fait de leur souplesse qui fait qu'elles ont tendance à aller se loger derrière les bouteilles 50, ce qui complique la tâche de l'utilisateur lorsqu'il souhaite les attacher, donc lui fait perdre du temps, avec le risque qu'une bouteille puisse basculer tant qu'elle n'est pas attachée. De plus, elles sont difficiles à nettoyer et à désinfecter du fait du tissu qui les compose. De plus, elles sont sujettes à une usure plus rapide si elles ne sont pas utilisées avec précaution et mal entretenues au fil du temps.

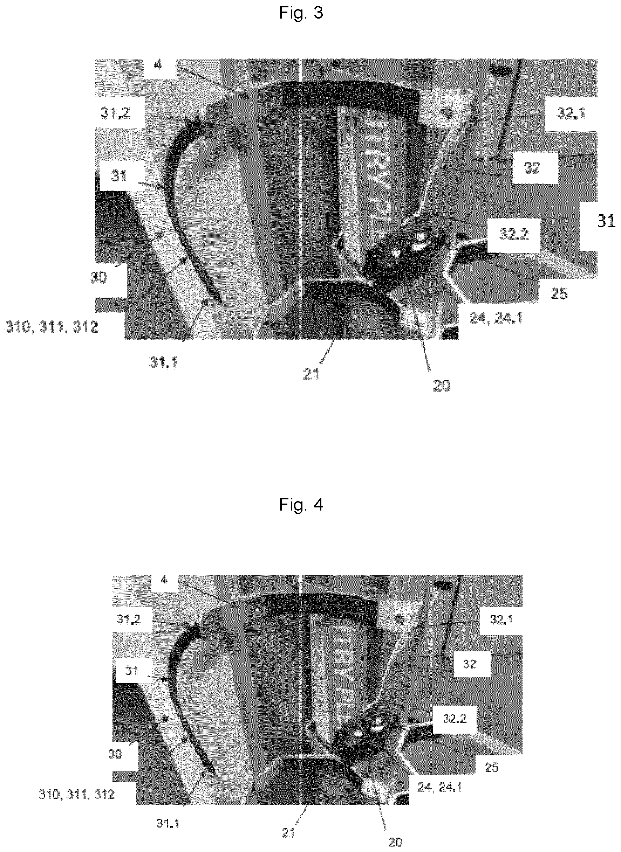

Afin de pallier ces problèmes, selon l'invention, on équipe le chariot mobile 1 de plusieurs dispositifs d'attache ou de fixation 30 qui ne sont pas des sangles souples en tissu comme illustré en Fig. 2, mais des éléments ou tronçons de sangle en matériau polymère semi-rigide, tel qu'illustré sur Fig. 3 à Fig. 10.

De préférence, les premier et second éléments de sangle 31, 32 sont en matériau polymère semi-rigide, par exemple en polyuréthane ou en polyamide, notamment en Nylon^{®}. Utiliser un tel matériau permet de conférer une élasticité aux éléments de sangle 31, 32 suffisante pour leur faire épouser le contour externe des corps de bouteilles de gaz lorsqu'ils sont resserrés autour des bouteilles et, à l'inverse, leur conférer aussi une certaine tenue empêchant leur affaissement ou similaire lorsqu'ils sont détachés, par exemple en l'absence de bouteille ou avant fixation des bouteilles, de sorte de faciliter la fixation, c'est-à-dire leur solidarisation l'un à l'autre.

Les dispositifs de fixation 30 ou dispositifs d'attache sont agencés sur la structure-support 4 et permettre de fixer ou attacher fermement les bouteilles de gaz 50, 51 à la structure-support 4, en particulier aux colonne arrière 4.2 et colonne avant 4.1. De préférence, chaque bouteille de gaz 50, 51 est maintenue, c'est-à-dire fixée ou attachée, par une paire de dispositifs de fixation 30 qui sont agencés de manière espacée l'un de l'autre, par exemple espacés de quelques dizaines de centimètres, afin d'assurer un maintien dans des zones différentes de chaque bouteille 50, 51, typiquement en haut et en bas du corps cylindrique de chaque bouteille 50, 51, lorsqu'elle est en position debout.

Chaque dispositif de fixation 30 comprend un premier élément de sangle 31 comprenant une première extrémité libre 31.1, et un second élément de sangle 32 comprenant un dispositif de connexion 20. Les premier 31 et second 32 éléments de sangle coopèrent l'un avec l'autre, via la première extrémité libre 31.1 et le dispositif de connexion 20. Plus précisément, la première extrémité libre 31.1 du premier élément de sangle 31 et le dispositif de connexion 20 du second élément de sangle 32 coopèrent l'un avec l'autre pour assurer leur solidarisation mécanique.

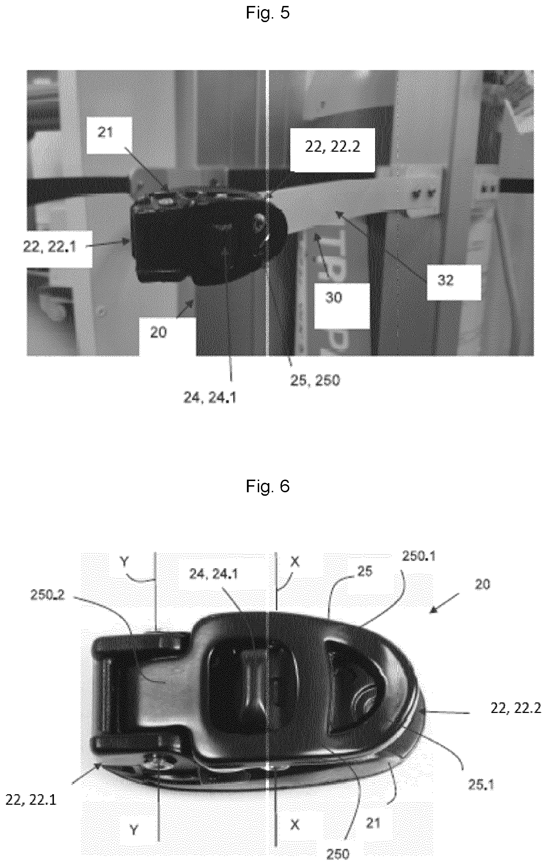

Le dispositif de connexion 20, dont un mode de réalisation est représenté en Fig. 6, comprend un corps principal 21 traversé par un passage interne 22 s'étendant entre une entrée 22.1 et une sortie 22.2 de passage. Le passage interne 22 est configuré pour loger au moins une partie du premier élément de sangle 31 qui est conformé et/ou dimensionné pour être s'inséré par l'utilisateur, selon un mouvement de translation, dans le passage interne 22 du corps 21 du dispositif de connexion 20.

Le dispositif de connexion 20 peut être solidarisé au second 32 élément de sangle par vissage, rivetage, collage ou analogue.

Le dispositif de connexion 20 comprend en outre des moyens de blocage 23 qui sont mobiles entre (au moins) deux positions dites 'stables', à savoir une position de blocage ou de verrouillage et une position de libération ou de déverrouillage, voire des positions intermédiaires.

Dans la position de blocage ou de verrouillage, les moyens de blocage 23 du dispositif de connexion 20 coopèrent avec le premier élément de sangle 31 inséré dans le passage interne 21, pour empêcher ou s'opposer à tout mouvement de retrait, i.e. total ou partiel, du premier élément de sangle 31 du passage interne 21, c'est-à-dire empêcher tout retrait en translation par l'utilisateur, du premier élément de sangle 31 hors du passage interne 21. Ceci permet de fixer, c'est-à-dire d'attacher, et/ou maintenir, solidement les bouteilles 50, 51 au chariot 1, comme illustré en Fig. 3 qui montre les premier et second éléments de sangle 31, 32 assemblés l'un à l'autre pour maintenir/fixer solidement la bouteille de gaz 50.

A l'inverse, dans la position de libération ou de déverrouillage, les moyens de blocage 23 du dispositif de connexion 20 autorisent un mouvement, i.e. un déplacement, du premier élément de sangle 31 dans le passage interne 21, c'est-à-dire que les moyens de blocage 23 ne s'opposent pas ou plus à un retrait (voire aussi de continuer une insertion) en translation par l'utilisateur, du premier élément de sangle 31 du passage interne 21. Ceci permet notamment de désassembler ou découpler les premier et second éléments de sangle 31, 32 l'un de l'autre, comme illustré en Fig. 4 ou Fig. 5, et donc de libérer les bouteilles 50, 51 lorsque l'on souhaite les retirer du chariot 1, par exemple pour remplacer une bouteille vide par une bouteille pleine de gaz.

Par ailleurs, des moyens de libération 24, actionnables par l'utilisateur, sont aussi prévus sur le dispositif de connexion 20. Ils permettent de passer de la position de blocage à la position de libération, lorsqu'ils sont actionnés par l'utilisateur, par exemple lorsque l'utilisateur appuie dessus, comme illustré en Fig. 6.

Les moyens de libération 24 comprennent par exemple un bouton-poussoir ou analogue venant appuyer sur les moyens de blocage 23 pour les passer en position de libération, lorsque l'utilisateur vient exercer une action, par exemple une pression digitale, sur lesdits moyens de libération 24.

Les moyens de libération 24 sont normalement dans une position de repos lorsque les moyens de blocage 23 sont dans la position de blocage.

Après leur relâchement, par exemple en fin de pression digitale de l'utilisateur, les moyens de libération 24 peuvent être rappelés dans leur position de repos par des moyens de rappel élastiques, tel un (ou des) ressort ou analogue.

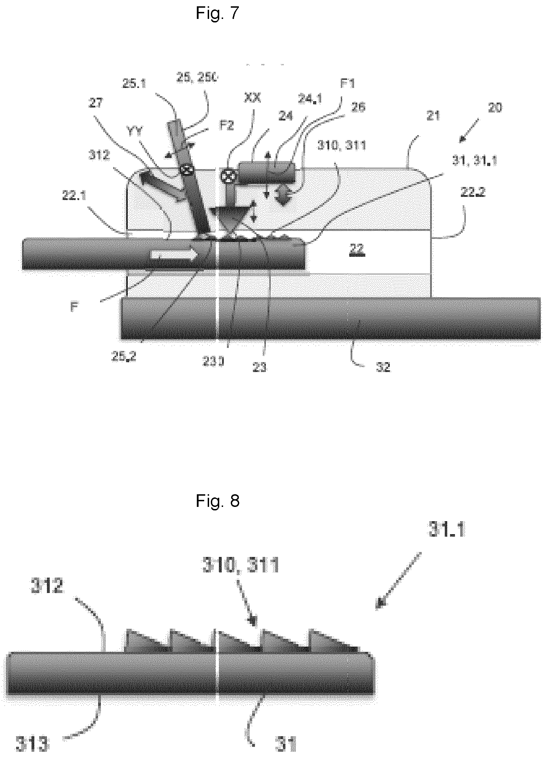

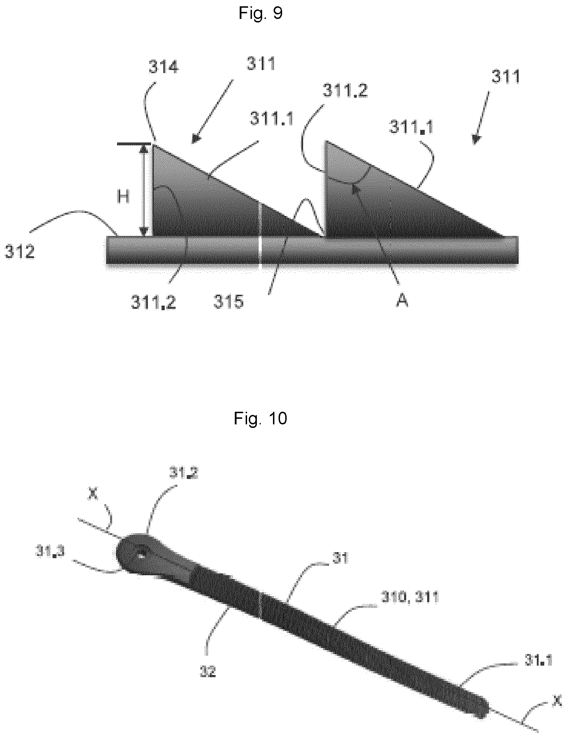

En outre, les premier 31 et second 32 éléments de sangle ont typiquement une forme de bande ou de ruban, comme illustré notamment en Fig. 10 qui montre un mode de réalisation du premier élément de sangle 31. Ils comprennent donc deux faces ou surfaces 312, 313 opposées, comme visible sur Fig. 7 et Fig. 8, à savoir une face extérieure dirigée vers l'extérieur et une face intérieure dirigée vers la bouteille de gaz.

Plus précisément, pour améliorer le maintien ferme et solidaire du premier élément de sangle 31 dans le logement formé par le passage interne 21, notamment pour empêcher un glissement intempestif de celui-ci dans le sens du retrait hors du passage interne 21, lorsqu'une bouteille vient exercer une force de poussée dessus, on prévoit, selon l'invention, (au moins) une région texturée en relief 310 sur l'une 312 des faces du premier élément de sangle 31, comme schématisé sur Fig. 7 à Fig. 10.

Les moyens de blocage 23 coopérant, en position de blocage, avec cette région texturée en relief 310 du (de chaque) premier élément de sangle 31 afin d'empêcher notamment que le premier élément de sangle 31 ne puisse glisser et/ou s'extraire inopinément du passage interne 21 dans lequel il est inséré et maintenu par les moyens de blocage 23, lorsqu'ils sont en position de blocage.

Comme schématisé (vues latérales en coupe) sur Fig. 8 & 9, la région texturée en relief 310 comprend une succession de cannelures 311, de préférence rectilignes, lesquelles sont agencées en parallèle les unes des autres.

Ces cannelures 311 forment une alternance de pics ou sommets 314 et de vallées ou creux 315, comme visible sur Fig. 8 & 9 qui schématisent une vue partielle et grossie de cannelures 311. Chaque cannelure 311 présente (vue en coupe) un côté avant 311.1 formant une rampe inclinée dirigée vers la première extrémité 31.1 libre de chaque premier élément de sangle 31, et un côté arrière 311.2 (sensiblement) vertical, situé à l'opposé du côté avant 311.1.

De préférence, l'angle A formé au niveau du sommet 314 séparant le côté avant 311.1 et le côté arrière 311.2 est compris entre 30 et 60°, de préférence de l'ordre de 40 à 50°.

Les côtés avant 311.1 et arrière 311.2 d'une même cannelure 311 se rejoignent au sommet 314 de la cannelure 311 considérée, alors qu'une cannelure 311 est séparée de la cannelure 311 suivante par une vallée 315. De préférence, la hauteur H d'une cannelure 311 est inférieure ou égale à 5 mm, typiquement entre 1 et 3 mm.

Comme schématisé en Fig. 10, les cannelures 311 sont agencées parallèles les unes aux autres, perpendiculairement à l'axe (XX) du premier élément de sangle 31. La face externe 312 du premier élément de sangle 31 comprend typiquement plusieurs dizaines de cannelures 311. A l'inverse, la face interne 313 du premier élément de sangle 31 est préférentiellement lisse, c'est-à-dire dépourvue de cannelures 311.

Chaque premier élément de sangle 31, y compris la région texturée en relief 310, est préférentiellement formé d'une seule pièce par moulage par injection ou analogue, de matériau polymère.

Comme on le voit, la région texturée en relief 310 est située au moins du côté de la première extrémité 31.1 libre de chaque premier élément de sangle 31 et s'étend sur une majeure partie de la face externe 312 du premier élément de sangle 31, c'est-à-dire au moins 40 à 50% de la surface externe. Ainsi, en Fig. 10, on voit que la région texturée en relief 310 s'étend, dans le mode de réalisation présenté, sur au moins 75% ici, voire au moins 80%, de la superficie de la face externe 312 du premier élément de sangle 31.

Le premier élément de sangle 31 de Fig. 10 a une forme de bande allongée comprenant une extrémité arrière 31.2, ici élargie formant une tête de fixation, traversée par un orifice de fixation 31.3 servant à la fixation du premier élément de sangle 31 à la structure-support 4, par exemple par vissage à l'aide d'une vis ou analogue venant s'insérer dans ledit orifice de fixation 31.3, en particulier à l'une ou l'autre des colonnes arrière ou avant 4.1, 4.2 de la structure-support 4.

Le second élément de sangle 32 a une structure analogue, à savoir une forme de bande allongée comprenant une extrémité amont similaire 32.1 ou identique à l'extrémité arrière 31.2 du premier élément de sangle 31 pour permettre, là encore, à la structure-support 4, par exemple par vissage à l'aide d'une vis ou analogue.

Fig. 7 schématise la structure et le fonctionnement du dispositif de connexion 20 du second élément de sangle 32 lorsqu'il coopère avec le premier élément de sangle 31 pour assurer une fixation, c'est-à-dire une attache, d'une bouteille de gaz 50 au chariot 1.

Comme déjà expliqué, on voit le corps principal 21 qui est traversé par le passage interne 22 s'étendant entre une entrée 22.1 et une sortie 22.2 de passage, lequel sert de logement, dans lequel le premier élément de sangle 31 peut être inséré par l'utilisateur, selon un mouvement de translation allant de la gauche vers la droite sur Fig. 7, c'est-à-dire dans la direction de la flèche F donnant le sens d'insertion, via l'entrée de passage 22.1.

Une fois que le premier élément de sangle 31 est inséré dans le passage interne 22, les moyens de blocage 23 mobiles se trouvent dans leur position de blocage, comme illustré en Fig. 7, et viennent coopérer avec le premier élément de sangle 31, en particulier la région texturée 310 portée par la face externe 312 du premier élément de sangle 31, pour empêcher ou s'opposer à tout mouvement de retrait dudit premier élément de sangle 31 au sein du passage interne 21, à savoir tout retrait du premier élément de sangle 31, dans le sens de retrait qui est contraire au sens d'insertion (flèche F).

Dans cette position de blocage, les moyens de blocage 23 viennent appuyer sur la région texturée 310 portée par la face externe 312 du premier élément de sangle 31, via une partie proximale formant un élément de came de blocage 230.

Autrement dit, les moyens de blocage 23 comprennent un élément de came de blocage 230 venant s'insérer dans l'une des vallées 315 situées entre deux cannelures successives 311 pour empêcher le retrait du premier élément de sangle 31 du passage interne 22, étant donné que l'élément de came de blocage 230 vient alors en butée contre la paroi du côté arrière 311.2 vertical adjacente à la vallée 315 dans laquelle est logé l'élément de came de blocage 230. Cette mise en butée empêche le retrait translatif (sens opposé à flèche F) mais peut autoriser de continuer un mouvement d'insertion puisque, dans ce cas, l'élément de came de blocage 230 peut glisser le long de la rampe ou pente de l'autre cannelure 310, c'est-à-dire dans le sens de l'insertion donné par la flèche **F,** jusqu'à passer dans la vallée 315 suivante, voire une ou plusieurs autres vallée 315, de manière à augmenter le serrage, comme expliqué ci-après.

En effet, plus le premier élément de sangle 31 est inséré par translation dans le passage interne 22 du dispositif de connexion 20 du second élément de sangle 32 (comme illustré en Fig. 3), plus il est possible d'accroître le serrage opéré par le dispositif de fixation 30, c'est-à-dire d'attache, sur le corps de la bouteille de gaz 50 qui est retenue par le dispositif de fixation 30 considéré.

Lorsque la bouteille de gaz 50 est vide et doit être remplacé, il est nécessaire de desserrer le dispositif de fixation 30 et l'ouvrir en séparant les deux éléments de sangle 31, 32, l'un de l'autre, c'est-à-dire en extrayant le premier élément de sangle 31 du passage interne 22 du dispositif de connexion 20 du second élément de sangle 32, comme illustré en Fig. 4 & 5. Pour ce faire, les moyens de blocage 23 doivent passer dans leur position de libération, dans laquelle un mouvement du premier élément de sangle 31 dans le passage interne 21 est possible, en particulier un retrait translatif du premier élément de sangle 31 du passage interne 21 du dispositif de connexion 20 du second élément de sangle 32.

Le passage de la position de blocage à la position de libération se fait par appui de l'utilisateur sur les moyens de libération 24, actionnables par l'utilisateur, tel un bouton-poussoir 24.1 ou analogue. Ces moyens de libération 24 passent alors d'une position de repos à une position d'actionnement. Lorsqu'ils sont actionnés, les moyens de libération 24 passent en position d'actionnement et viennent alors coopérer avec les moyens de blocage 23, par exemple appuyer dessus, pour les faire passer de la position de blocage à la position de libération, par exemple par pivotement ou basculement autour d'un axe XX ou selon un autre mouvement.

En position de libération (non montrée), les moyens de blocage 23 cessent de coopérer avec la région texturée 310 portée par la face externe 312 du premier élément de sangle 31. Plus précisément, l'élément de came de blocage 230 est alors retiré de la vallée 315 entre deux cannelures successives 311 dans laquelle il se trouvait, ce qui autorise alors un retrait du premier élément de sangle 31 du passage interne 22, puisque l'élément de came de blocage 230 cesse d'être en butée contre la paroi du côté arrière 311.2 vertical adjacente à la vallée 315 dans laquelle était logé. Un mouvement d'extraction est alors possible étant donné que l'élément de came de blocage 230 se retrouve alors positionné « au-dessus » des cannelure 310, c'est-à-dire qu'il est écarté de la région texturée 310 et ne vient plus appuyer dessus.

Lorsque l'utilisateur cesse d'appuyer sur les moyens de libération 24, tel le bouton-poussoir 24.1, ceux-ci peuvent revenir dans leur position de repos, c'est-à-dire leur position non actionnée, en étant rappelés par des moyens de rappel, par exemple un (des) élément élastique 26, tel un (des) ressort de rappel ou autre. La course des moyens de libération 24 entre leur position de repos et leur position d'actionnement est schématisée sur Fig. 7 par la flèche double F1.

Bien entendu, tout autre mécanisme de blocage/libération peut être utilisé.

Avantageusement, le dispositif de connexion 20 du second élément de sangle 32 comprend aussi des moyens de serrage 250 qui comprennent ici un élément de levier 25 actionnable par l'utilisateur, permettant d'ajuster la tension de fermeture des deux éléments de sangle 31, 32, lorsqu'ils ont été assemblés (comme illustré en Fig. 3) et solidarisés l'un à l'autre, comme expliqué ci-avant et illustré en Fig. 7.

Selon un mode de réalisation, l'élément de levier 25 des moyens de serrage 250 est pivotant (double flèche F2) autour d'un axe YY. Il comprend une portion proximale 25.1 actionnable par l'utilisateur pour le faire pivoter et une portion distale 25.2 venant coopérer, elle aussi, avec la région texturée 310 du premier élément de sangle 31, lorsque ce dernier est logé dans le passage interne 22 du dispositif de connexion 20 du second élément de sangle 32.

Cette portion distale 25.2 vient prendre appui, c'est-à-dire en butée, contre la paroi du côté arrière 311.2 vertical d'une des cannelure 310, et y exercer une force de poussée dans le sens de la flèche F, c'est-à-dire dans le sens de l'insertion du premier élément de sangle 31, lorsque l'élément de levier 25 est actionné par l'utilisateur, ce qui fait alors progresser le premier élément de sangle 31 au sein du passage interne 21 du dispositif de connexion 20, donc augmente le serrage de l'ensemble de fixation, c'est-à-dire le serrage de la sangle autour du corps de la bouteille considérée.

Bien que les moyens de blocage 23 soient en position de blocage, pendant l'actionnement des moyens de serrage 250, à savoir de l'élément de levier 25 pivotant par l'utilisateur, c'est-à-dire pendant le serrage, le mouvement translatif du premier élément de sangle 31 peut se produire, c'est-à-dire n'est pas empêché car, comme déjà expliqué, l'élément de came de blocage 230 peut glisser le long des rampes 311.1 portées par les cannelures 310 qui sont juxtaposées les unes aux autres, ce qui permet une progression du premier élément de sangle 31 dans le sens de l'insertion (flèche F), étant donné que l'élément de came de blocage 230 peut progresser en passant successives d'une vallée 315 à une autre.

Lorsque l'élément de levier 25 pivotant des moyens de serrage 250 est relâché par l'utilisateur, il cesse de coopérer avec la région texturée 310 du premier élément de sangle 31 et revient dans sa position de repos, comme montré en Fig. 6. Son rappel en position de repos peut se faire, là encore, via des moyens de rappel, par exemple un (des) élément élastique additionnel 27, tel un (des) ressort de rappel ou autre.

Autrement dit, les moyens de serrage 250 du dispositif de fixation 30, lorsqu'ils sont actionnés par l'utilisateur, viennent coopérer avec la région texturée en relief 310 du premier élément de sangle 31, lorsque le premier élément de sangle 31 est inséré dans le passage interne 21 du dispositif de connexion 20 et que les moyens de blocage 23 sont en position de blocage, de manière à faire progresser en translation, le premier élément de sangle 31 au sein du passage interne 21 du dispositif de connexion 20, dans le sens de l'insertion (flèche F) et ainsi augmenter ou améliorer le serrage de bouteille de gaz 50 qui est maintenue par le dispositif de fixation 30.

On voit sur Fig. 6 que la portion proximale 25.1 actionnable par l'utilisateur de l'élément de levier 25 a, dans le mode de réalisation présenté, une forme de boucle 250.1 reliée à la portion distale 25.2 (non visible) par une portion de jonction 250.2, telle une portion en forme de bande ou analogue.

D'une façon générale, le chariot 1 est particulièrement bien adapté à une utilisation en milieu hospitalier, notamment dans le cadre de la mise en œuvre d'un traitement thérapeutique d'un patient adulte, adolescent, enfant ou nouveau-né, souffrant d'une pathologie pulmonaire, comme PPHN, SDRA ou HP en chirurgie cardiaque, avec administration par inhalation de NO gazeux au patient en ayant besoin, de manière à dilater ses vaisseaux pulmonaires et augmenter ainsi l'oxygénation sanguine en améliorant les échanges gazeux pulmonaires.

## Revendications

1. Chariot (1) mobile comprenant :
- une embase (2) configurée pour loger au moins une bouteille de gaz (50)
- plusieurs roulettes (3) pour déplacer le chariot sur le sol,
- une structure-support (4) se projetant vers le haut depuis l'embase (2), et
- au moins un dispositif de fixation (30) agencé sur la structure-support (4) pour fixer ladite au moins une bouteille de gaz (50) à ladite structure-support (4),
dans lequel ledit au moins un dispositif de fixation (30) comprend un premier élément de sangle (31) comprenant une première extrémité (31.1) libre, et un second élément de sangle (32) comprenant un dispositif de connexion (20), ledit premier élément de sangle (31) venant coopérer avec le second élément de sangle (32) pour permettre leur solidarisation l'un à l'autre lorsque la première extrémité (31.1) libre du premier élément de sangle (31) coopère avec le dispositif de connexion (20) du second élément de sangle (32),
**caractérisé en ce que** les premier élément de sangle (31) et second élément de sangle (32) sont en matériau polymère semi-rigide, et le dispositif de connexion (20) du second élément de sangle (32) comprend :
- un corps principal (21) traversé par un passage interne (22) s'étendant entre une entrée (22.1) et une sortie (22.2), et configuré pour loger au moins une partie du premier élément de sangle (31),
- des moyens de blocage (23) mobiles entre au moins deux positions, comprenant :
▪ une position de blocage dans laquelle les moyens de blocage (23) coopèrent avec une région texturée en relief (310) dupremier élément de sangle (31) inséré dans le passage interne (21), pour empêcher ou s'opposer à tout mouvement de retrait dudit premier élément de sangle (31) du passage interne (21), et
▪ une position de libération dans laquelle les moyens de blocage (23) permettent un mouvement de retrait du premier élément de sangle (31) dans ledit passage interne (21),
- des moyens de libération (24), actionnables par l'utilisateur, coopérant avec les moyens de blocage (23) pour les faire passer de la position de blocage à la position de libération, lorsqu'ils sont actionnés par l'utilisateur,
- et des moyens de serrage (250), actionnables par l'utilisateur, configurés pour coopérer avec la région texturée en relief (310) du premier élément de sangle (31), lorsque le premier élément de sangle (31) est inséré dans le passage interne (21) du dispositif de connexion (20) du second élément de sangle (32) et que les moyens de blocage (23) sont en position de blocage, de manière à faire progresser en translation, lorsqu'ils sont actionnés par l'utilisateur, le premier élément de sangle (31) au sein du passage interne (21) du dispositif de connexion (20), dans le sens de l'insertion.

2. Chariot selon la revendication 1, **caractérisé en ce que** le premier élément de sangle (31) est configuré pour être inséré, via sa première extrémité (31.1) libre, au sein du passage interne (22) du dispositif de connexion (20) du second élément de sangle (32), via l'entrée (22.1) dudit passage interne (22) du dispositif de connexion (20), via un mouvement de translation.

3. Chariot selon la revendication 1, **caractérisé en ce que** la région texturée en relief (310) comprend une succession de cannelures (311) agencées en parallèles les unes des autres, de préférence des cannelures (311) rectilignes.

4. Chariot selon la revendication 3, **caractérisé en ce que** les cannelures (311) présentent chacune un côté avant (311.1) formant une rampe et un côté arrière (311.2) vertical, séparés par un sommet (314).

5. Chariot selon la revendication 1, **caractérisé en ce que** la région texturée en relief (310) est portée sur une face externe (312) du premier élément de sangle (31).

6. Chariot selon la revendication 1, **caractérisé en ce que** les moyens de serrage (250) comprennent un élément de levier (25).

7. Chariot selon la revendication 6, **caractérisé en ce que** l'élément de levier (25) est pivotant.

8. Chariot selon les revendications 1 et 6 ou 7, **caractérisé en ce que** l'élément de levier (25) comprend une portion distale (25.2) venant coopérer avec la région texturée (310) du premier élément de sangle (31) lorsque le premier élément de sangle (310) est logé dans le passage interne (21) du dispositif de connexion (20) du second élément de sangle (32).

9. Chariot selon les revendications 7 et 8, **caractérisé en ce que** l'élément de levier (25) comprend en outre une portion proximale (25.1) actionnable par l'utilisateur pour faire pivoter l'élément de levier (25).

10. Chariot selon l'une des revendications 3 ou 4, **caractérisé en ce que** les cannelures (311) sont conformées pour permettre une insertion du premier élément de sangle (31) dans le passage interne (21) du corps du dispositif de connexion (20) mais empêcher son retrait dudit passage interne (21), lorsque les moyens de blocage (23) sont en position de blocage et viennent coopérer avec les cannelures (311).

11. Chariot selon la revendication 10, **caractérisé en ce que** les cannelures (311) forment des stries en relief juxtaposées les unes aux autres.

12. Chariot selon les revendications 6 et 8, **caractérisé en ce que**, lorsque l'élément de levier (25) est actionné par l'utilisateur, de préférence pivoté, la portion distale (25.2) dudit élément de levier (25) vient prendre appui contre le côté arrière (311.2) vertical d'au moins une des cannelure (310) pour y exercer une force de poussée suffisante pour faire translater le premier élément de sangle (31) au sein du passage interne (21) du dispositif de connexion (20), dans le sens (F) d'insertion du premier élément de sangle (31).

13. Chariot selon la revendication 12, **caractérisé en ce que**, lorsque les moyens de blocage (23) sont en position de blocage et l'élément de levier (25) est actionné par l'utilisateur, le mouvement translatif du premier élément de sangle (31) au sein du passage interne (21) du dispositif de connexion (20) n'est pas empêché dans le sens (F) de l'insertion.

14. Chariot selon la revendication 1, **caractérisé en ce qu'**en position de blocage, les moyens de blocage (23) viennent appuyer sur la région texturée (310) portée par une face externe (312) du premier élément de sangle (31), via une partie proximale formant un élément de came de blocage (230).

15. Utilisation d'un chariot mobile (1) selon l'une des revendications précédentes, pour transporter une ou plusieurs bouteilles de gaz contenant un mélange NO/N₂ et/ou de l'oxygène.

## Patentansprüche

1. Mobiler Wagen (1), umfassend:
- einer Basis (2), die so konfiguriert ist, dass sie mindestens eine Gasflasche (50) aufnehmen kann
- mehrere Rollen (3) zum Bewegen des Wagens auf dem Boden,
- eine von der Basis (2) nach oben ragende Tragkonstruktion (4) und
- mindestens eine Befestigungsvorrichtung (30), die an der Tragkonstruktion (4) angeordnet ist, um den mindestens einen Gaszylinder (50) an der Tragkonstruktion (4) zu befestigen,
wobei die mindestens eine Befestigungsvorrichtung (30) ein erstes Riemenelement (31) mit einem ersten freien Ende (31.1) und ein zweites Riemenelement (32) mit einer Verbindungsvorrichtung (20) umfasst, wobei das erste Bandelement (31) mit dem zweiten Bandelement (32) zusammenwirkt, um sie aneinander zu befestigen, wenn das freie erste Ende (31.1) des ersten Bandelements (31) mit der Verbindungsvorrichtung (20) des zweiten Bandelements (32) zusammenwirkt,
**dadurch gekennzeichnet, dass** das erste Bandelement (31) und das zweite Bandelement (32) aus einem halbstarren Polymermaterial bestehen und die Verbindungsvorrichtung (20) des zweiten Bandelements (32) umfasst:
- einen Hauptkörper (21), der von einem inneren Durchgang (22) durchquert wird, der sich zwischen einem Einlass (22.1) und einem Auslass (22.2) erstreckt und so konfiguriert ist, dass er mindestens einen Teil des ersten Riemenelements (31) aufnehmen kann,
- Verriegelungsmittel (23), die zwischen mindestens zwei Positionen bewegbar sind und Folgendes umfassen:
▪ eine Verriegelungsposition, in der die Verriegelungsmittel (23) mit einem strukturierten erhöhten Bereich (310) des ersten Riemenelements (31), das in den inneren Durchgang (21) eingeführt ist, zusammenwirken, um jede Ausziehbewegung des ersten Riemenelements (31) aus dem inneren Durchgang (21) zu verhindern oder zu behindern, und
▪ eine Freigabestellung, in der die Verriegelungsmittel (23) ein Herausziehen des ersten Riemenelements (31) aus dem inneren Durchgang (21) ermöglichen,
- eine vom Benutzer betätigbare Entriegelungseinrichtung (24), die mit der Verriegelungseinrichtung (23) zusammenwirkt, um diese bei Betätigung durch den Benutzer aus der Verriegelungsstellung in die Entriegelungsstellung zu bewegen,
- und Spannmittel (250), die vom Benutzer betätigt werden können und so konfiguriert sind, dass sie mit dem strukturierten Reliefbereich (310) des ersten Riemenelements (31) zusammenwirken, wenn das e erste Riemenelement (31) in den inneren Durchgang (21) der Verbindungsvorrichtung eingeführt ist (20) des zweiten Riemenelements (32) eingeführt ist und die Verriegelungsmittel (23) sich in der Verriegelungsposition befinden, so dass das erste Riemenelement (31) bei Betätigung durch den Benutzer innerhalb des inneren Durchgangs (21) der Verbindungsvorrichtung (20) in Einführrichtung verschoben wird.

2. Wagen gemäß Anspruch 1, **dadurch gekennzeichnet, dass** das erste Riemenelement (31) so konfiguriert ist, dass es über sein freies erstes Ende (31.1) durch den Eingang (22.1) des inneren Durchgangs (22) der Verbindungsvorrichtung (20) des zweiten Riemenelements (32) in den inneren Durchgang (22) der Verbindungsvorrichtung (20) eingeführt werden kann (20) durch den Eingang (22.1) des inneren Durchgangs (22) der Verbindungsvorrichtung (20) mittels einer Translationsbewegung

3. Wagen gemäß Anspruch 1, **dadurch gekennzeichnet, dass** der strukturierte Reliefbereich (310) eine Abfolge von parallel zueinander angeordneten, vorzugsweise geraden Nuten (311) umfasst.

4. Wagen gemäß Anspruch 3, **dadurch gekennzeichnet, dass** die Nuten (311) jeweils eine eine Rampe bildende Vorderseite (311.1) und eine vertikale Rückseite (311.2) aufweisen, die durch einen Scheitelpunkt (314) voneinander getrennt sind.

5. Wagen nach Anspruch 1, **dadurch gekennzeichnet, dass** der strukturierte Reliefbereich (310) an einer Außenfläche (312) des ersten Riemenelements (31) angebracht ist.

6. Wagen gemäß Anspruch 1, **dadurch gekennzeichnet, dass** die Klemmmittel (250) ein Hebelelement (25) umfassen.

7. Wagen gemäß Anspruch 6, **dadurch gekennzeichnet, dass** das Hebelelement (25) schwenkbar ist.

8. Wagen nach den Ansprüchen 1 und 6 oder 7, **dadurch gekennzeichnet, dass** das Hebelelement (25) einen distalen Abschnitt (25.2) aufweist, der mit dem strukturierten Bereich (310) des ersten Riemen s (31) zusammenwirkt, wenn das erste Riemen s (310) in dem inneren Durchgang (21) der Verbindungsvorrichtung (20) des zweiten Riemen s (31) aufgenommen ist. (32) aufgenommen ist.

9. Wagen gemäß den Ansprüchen 7 und 8, **dadurch gekennzeichnet, dass** das Hebelelement (25) ferner einen proximalen Abschnitt (25.1) umfasst, der vom Benutzer betätigt werden kann, um das Hebelelement (25) zu schwenken.

10. Wagen gemäß einem der Ansprüche 3 oder 4, **dadurch gekennzeichnet, dass** die Keilnuten (311) so geformt sind, dass sie das Einführen des ersten Riemenelements (31) in den inneren Durchgang (21) des Körpers der Verbindungsvorrichtung (20) ermöglichen, aber dessen Entfernen aus dem inneren Durchgang (21) verhindern, wenn sich die Verriegelungsmittel (23) in der Verriegelungsposition befinden und in die Nuten (311) in Eingriff stehen.

11. Wagen gemäß Anspruch 10, **dadurch gekennzeichnet, dass** die Nuten (311) nebeneinander angeordnete Erhebungen bilden.

12. Wagen gemäß den Ansprüchen 6 und 8, **dadurch gekennzeichnet, dass** bei Betätigung des Hebelelements (25) durch den Benutzer, vorzugsweise durch Schwenken, der distale Abschnitt (25.2) des Hebelelements (25) an der vertikalen Rückseite (311.2) mindestens einer der Nuten (310), um eine Schubkraft auszuüben, die ausreicht, um das erste Riemenelement (31) innerhalb des inneren Durchgangs (21) der Verbindungsvorrichtung (20) in Einführrichtung (F) des ersten Riemenelements (31) zu verschieben.

13. Wagen gemäß Anspruch 12, **dadurch gekennzeichnet, dass**, wenn sich die Verriegelungsmittel (23) in der Verriegelungsposition befinden und das Hebelelement (25) vom Benutzer betätigt wird, die Translationsbewegung des ersten Riemenelements (31) innerhalb des inneren Durchgangs (21) der Verbindungsvorrichtung (20) in Einführrichtung (F) nicht verhindert wird.

14. Wagen nach Anspruch 1, **dadurch gekennzeichnet, dass** die Verriegelungsmittel (23) in der Verriegelungsstellung über einen proximalen Teil, der ein Verriegelungsnockenelement (230) bildet, gegen den strukturierten Bereich (310) drücken, der von einer Außen sfläche (312) des ersten Riemenelements (31) getragen wird.

15. Verwendung eines fahrbaren Wagens (1) nach einem der vorstehenden Ansprüche zum Transportieren einer oder mehrerer Gasflaschen, die ein Gemisch aus NO/N₂ und/oder Sauerstoff enthalten.

## Claims

1. A mobile trolley (1) comprising:
- a base (2) configured to house at least one gas cylinder (50)
- a plurality of casters (3) for moving the trolley on the ground,
- a support structure (4) projecting upward from the base (2), and
- at least one fastening device (30) arranged on the support structure (4) for fastening said at least one gas cylinder (50) to said support structure (4),
wherein said at least one fastening device (30) comprises a first strap element (31) comprising a first free end (31.1), and a second strap element (32) comprising a connection device (20), said first strap element (31) cooperating with the second strap element (32) to allow them to be secured to each other when the free first end (31.1) of the first strap element (31) cooperates with the connection device (20) of the second strap element (32),
**characterized in that** the first strap element (31) and the second strap element (32) are made of semi-rigid polymer material, and the connection device (20) of the second strap element (32) comprises:
- a main body (21) traversed by an internal passage (22) extending between an inlet (22.1) and an outlet (22.2), and configured to house at least part of the first strap element (31),
- locking means (23) movable between at least two positions, comprising:
▪ a locking position in which the locking means (23) cooperate with a textured raised region (310) of the first strap element (31) inserted into the internal passage (21), to prevent or oppose any withdrawal movement of said first strap element (31) from the internal passage (21), and
▪ a release position in which the locking means (23) allow withdrawal of the first strap element (31) in the internal passage (21),
- release means (24), operable by the user, cooperating with the locking means (23) to move them from the locking position to the release position when operated by the user,
- and tightening means (250), operable by the user, configured to cooperate with the textured relief region (310) of the first strap element (31), when the first strap element (31) is inserted into the internal passage (21) of the connection device (20) of the second strap element (32) and the locking means (23) are in the locking position, so as to cause the first strap element (31) to move in translation, when actuated by the user, within the internal passage (21) of the connection device (20), in the direction of insertion.

2. Trolley according to claim 1, **characterized in that** the first strap element (31) is configured to be inserted, via its free first end (31.1), into the internal passage (22) of the connection device (20) of the second strap element (32), through the entrance (22.1) of said internal passage (22) of the connection device (20), by means of a translational movement.

3. Trolley according to claim 1, **characterized in that** the textured relief region (310) comprises a succession of grooves (311) arranged parallel to each other, preferably straight grooves (311).

4. Trolley according to claim 3, **characterized in that** the grooves (311) each have a front side (311.1) forming a ramp and a vertical rear side (311.2), separated by a vertex (314).

5. Trolley according to claim 1, **characterized in that** the textured relief region (310) is carried on an outer face (312) of the first strap element (31).

6. Trolley according to claim 1, **characterized in that** the clamping means (250) comprise a lever element (25).

7. Trolley according to claim 6, **characterized in that** the lever element (25) is pivotable.

8. Trolley according to claims 1 and 6 or 7, **characterized in that** the lever element (25) comprises a distal portion (25.2) that cooperates with the textured region (310) of the first strap element (31) when the first strap element (310) is housed in the internal passage (21) of the connection device (20) of the second strap element (32).

9. Trolley according to claims 7 and 8, **characterized in that** the lever element (25) further comprises a proximal portion (25.1) operable by the user to pivot the lever element (25).

10. Trolley according to one of claims 3 or 4, **characterized in that** the splines (311) are shaped to allow insertion of the first strap element (31) into the internal passage (21) of the body of the connection device (20) but prevent its removal from said internal passage (21), when the locking means (23) are in the locking position and engage with the grooves (311).

11. Trolley according to claim 10, **characterized in that** the grooves (311) form raised ridges juxtaposed with one another.

12. Trolley according to claims 6 and 8, **characterized in that**, when the lever element (25) is actuated by the user, preferably pivoted, the distal portion (25.2) of said lever element (25) comes to bear against the vertical rear side (311.2) of at least one of the grooves (310) to exert a thrust force sufficient to translate the first strap element (31) within the internal passage (21) of the connection device (20) in the direction (F) of insertion of the first strap element (31).

13. Trolley according to claim 12, **characterized in that**, when the locking means (23) are in the locking position and the lever element (25) is actuated by the user, the translational movement of the first strap element (31) within the internal passage (21) of the connection device (20) is not prevented in the direction (F) of insertion.

14. Trolley according to claim 1, **characterized in that**, in the locking position, the locking means (23) press against the textured region (310) carried by an outer face (312) of the first strap element (31), via a proximal part forming a locking cam element (230).

15. Use of a mobile trolley (1) according to one of the preceding claims, for transporting one or more gas cylinders containing a mixture of NO/N₂ and/or oxygen.
